# EUROPEAN PATENT SPECIFICATION

(11) **EP 3 430 697 B1**
(45) Date of publication and mention of the grant of the patent: **29.07.2020**
(21) Application number: 17716995.0
(22) Date of filing: 14.03.2017
(51) Int. Cl.: H02H 1/04, F03B 13/00, H02N 1/04

(54) **TRIBOELECTRIC TURBINE FOR GENERATING ELECTRICITY FROM THE MOTION OF FLUIDS**
TRIBOELEKTRISCHE TURBINE ZUR STROMERZEUGUNG AUS DER BEWEGUNG VON FLÜSSIGKEITEN
TURBINE TRIBOÉLECTRIQUE POUR GÉNÉRER DE L'ÉLECTRICITÉ À PARTIR DU MOUVEMENT DE FLUIDES

(30) Priority: 14.03.2016 PT 2016109235
(43) Date of publication of application: 23.01.2019
(73) Proprietor: Universidade do Porto, 4099-002 Porto (PT)
(72) Inventor: OLIVEIRA VENTURA, João, 4169-007 Porto (PT); TRINDADE PEREIRA, André Miguel, 4169-007 Porto (PT); DA SILVA RODRIGUES, Cátia Raquel, 4169-007 Porto (PT); DA SILVA ALVES, Carla Alexandra, 4169-007 Porto (PT); FALCÃO DE OLIVEIRA, Filipe, 4169-007 Porto (PT); BENTO PUGA, Joel, 4169-007 Porto (PT); SALGUEIRO CARPINTEIRO, Francisco, 4169-007 Porto (PT)
(74) Representative: Patentree
(86) International application number: PCT/IB2017/051473
(87) International publication number: WO 2017/158513

(56) References cited:
- EP-A1- 0 366 591
- WO-A1-2010/143709
- CN-A- 103 780 129
- KR-B1- 101 569 311
- LONG LIN ET AL: "Segmentally Structured Disk Triboelectric Nanogenerator for Harvesting Rotational Mechanical Energy", NANO LETTERS, vol. 13, no. 6, 12 June 2013 (2013-06-12), pages 2916-2923, XP055212363, ISSN: 1530-6984, DOI: 10.1021/nl4013002

## Description

### TECHNICAL FIELD

The present invention relates to a rotary triboelectric generator, in particular a triboelectric generator for generating electricity from the motion of fluids, further in particular a triboelectric generator turbine for generating electricity from the motion of fluids.

### BACKGROUND

CN103780129, for which the preamble of claim 1 relates, discloses a rotary electrostatic generator, which comprises a power collecting component, a stator, a stator supporting member, a rotor, a rotor supporting member, a rotating shaft and a bearing, wherein the power collecting component is fixed on the rotating shaft, the rotating shaft, the rotor supporting member fixed on the rotating shaft and the rotor connected to the rotor supporting member are driven to rotate together by an external force, the rotor and the stator are enabled to be contacted with or separated from each other periodically, relative sliding friction is generated between a first friction layer and a second friction layer on the contact surface, and the friction area is changed, thereby being capable of generating electric signals and outputting the electric signals to an external circuit. The electric signal output not only can act as a power supply to drive electronic devices such as an LED, an LCD and the like or charge energy storage devices such as a lithium battery, a capacitor and the like, but also can be used for detecting the flow rate of a fluid in real time.

Document "Segmentally Structured disk triboelectric nanogenerator for harvesting rotational mechanical energy" Lin et al, NANO LETTERS, vol. 13, no. 6, 12 June 2013 (2013-06-12), pages 2916-2923, XP055212363, ISSN: 1530-6984, DOI: 10.1021/nl4013002, discloses a disk triboelectric nanogenerator (TENG) with segmental structures for harvesting rotational mechanical energy. Based on a cyclic in-plane charge separation between the segments that have distinct triboelectric polarities, the disk TENG generates electricity with unique characteristics which have been studied for maximizing output.

### GENERAL DESCRIPTION

A rotary triboelectric generator device according to the present invention is characterised by the features recited in the characterising portion of claim 1.

It is disclosed a triboelectric nanogenerator that is driven by a turbine to generate electricity from the motion of fluids. The device comprises a propeller shaft system placed in a tube to direct the fluid flow and that forces the propeller to rotate. The propeller is fixed on the shaft where one or several plates with a triboelectric material are placed. These plates rotate and come into contact with other plates composed by a triboelectric material with different tribo-polarity placed on a framework. In this structure, the triboelectric materials are isolated and, with small changes in the structure, it is possible to place the device in any environment.

In the embodiments of the present invention, it is made use of two operating principles different: contact and sliding modes.

In an embodiment, a type of triboelectric material has a relatively less negative triboelectric series rating and examples of suitable materials can include: air, human skin, glass, polyamide, poly(methyl metracrylate) (PMMA), a conductor, a metal, an alloy and combinations thereof. Therefore, the other type of triboelectric material is more negative and examples of such materials can include: poly(ethylene terephthalate) (PET), epoxy resin, poly-oxydiphenylene-pyromellitimide (such as Kapton), poly(vinyl chloride) (PVC), polydimethysiloxane (PDMS), polytetrafluoroethylene (PTFE), a conductor, a metal, an alloy and combinations thereof.

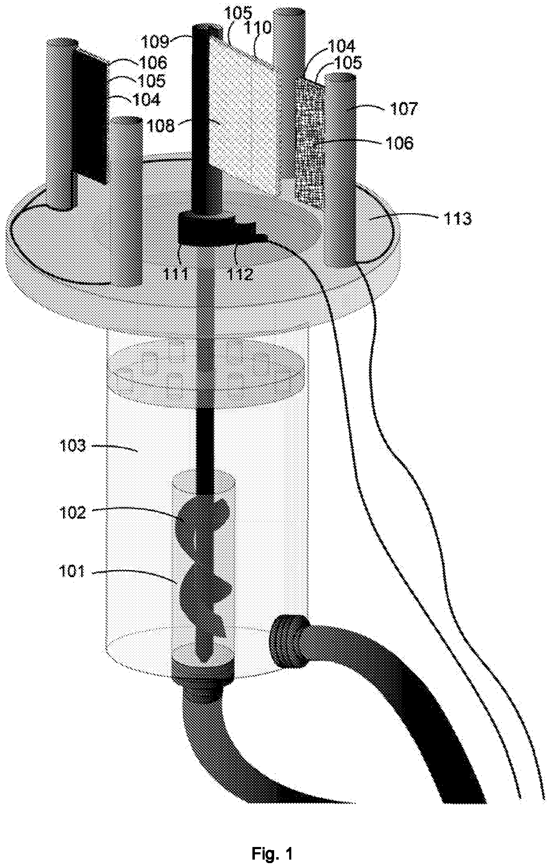

A preferred embodiment of the configuration of the propeller is shown in Figure 1, where it is observed that the propeller rotated as desired for different flow rates. This propeller has a helical shape and, when attached to a support with a rotary plate which comes into contact with the plates of the framework, the propeller continues to rotate. It was found that a helical propeller is particularly suited for being placed in a tube to direct fluid flow and force the triboelectric plates to generate electricity.

With a simple design, this device has the potential to be miniaturized to the micro scale. The ability to harvest energy from a wide range of sources and under various conditions, allows this device to be used in a wide range of areas.

For different triboelectric configurations, the plates fixed in the brackets can be connected in series or parallel. For higher voltage values, the plates placed in the brackets may be connected in series. However, if the purpose is to obtain higher currents, these plates should be placed in parallel.

### BRIEF DESCRIPTION OF THE DRAWINGS

The following figures provide preferred embodiments for illustrating the description and should not be seen as limiting the scope of invention.
**Figure 1****:** Schematic 3D representation of an embodiment of the triboelectric driven turbine structure.
**Figure 2****:** Schematic representation of an embodiment of the plurality of schematic views showing the working mechanism of the triboelectric driven turbine.
**Figure 3****:** Summary of the influence of the water flow on (a) mean VOC (<VOC >), (b) mean current (<ISC >) and (c) maximum power density, using three different configurations of triboelectric device.

### DETAILED DESCRIPTION

With reference to the drawings and more specifically Figure 1, the triboelectric driven turbine is schematically represented. The triboelectric driven turbine (Figure 1) is comprised by a propeller **102** placed into a tube **101** (for example, with 2.5 cm of diameter and 9 cm of height) to direct the fluid flow and consequently the propeller 102 is forced to rotate. This set is placed into a tube **103,** for example an acrylic tube with a diameter of 6 cm and a height of 13 cm, where the propeller **102** rotates for different fluid flows.

The propeller **102** has a helical shape and is attached to a support with a shaft 109.

The triboelectric material 110 is fixed on the shaft **109** (for example, with 1.8 cm of diameter and 8.3 cm of height) that rotates using the motion of the propeller 102 caused by the fluid flow. The electrical contact to this plate is optimized by the use of a sliding contact, for example a brass plate **111,** in the shaft **109,** which promotes the conduction of charges from the sliding contact/plate with the triboelectric material 110 to the external circuit.

A copper brush **112** makes the electrical contact with the shaft **109.** Consequently, the plate with the triboelectric material 110 fixed on shaft 109 comes into contact with the plates with the triboelectric material **106** fixed on the framework **113.**

The framework **113** (for example, with a diameter of 13 cm and a height of 9 cm) has four (for example) brackets to place the triboelectric material 106, which allows to use only one, two or four brackets **107.** The framework may comprise a different number of brackets, for example, 2, 3, 4, 5, 6 or more brackets.

When the triboelectric configuration is constituted by more than one bracket **107,** having more than one plate, the plates fixed in the brackets **107** can be connected in series or parallel.

The plates fixed on the brackets **107** and shaft **109** have two types of triboelectric materials and have different characteristics in relation to its stiffness. The plates fixed on the shaft are flexible and the plates fixed on the brackets are flexible but less flexible than the shaft plates, which improves the triboelectric contact area between them when they come in contact.

After the plates come into contact, their different stiffness allows to improve the dynamic contact between them, by a continuous sliding aligned with the movement, i.e. when the flexible plate is at the final sliding phase, the contact area is larger than if both plates had the same stiffness, because the softer plate adapts more readily to the other plate.

The plates which are fixed in the brackets **107** are constituted by two sheets (2 cm x 5 cm) of Kapton **104,** a layer of aluminium sheet **105** (2 cm x 5 cm) as electrode and a Nylon 6.6 film 106 (1.5 cm x 5 cm) that is the triboelectric material. The plate fixed on the shaft **109** is constituted by a sheet of ITO/PET 108 (4 cm x 5 cm), a layer of aluminium sheet **105** (4 cm x 5 cm) as electrode and a Polytetrafluoroethylene (PTFE) film **110** (1.5 cm x 5 cm) as the other triboelectric material.

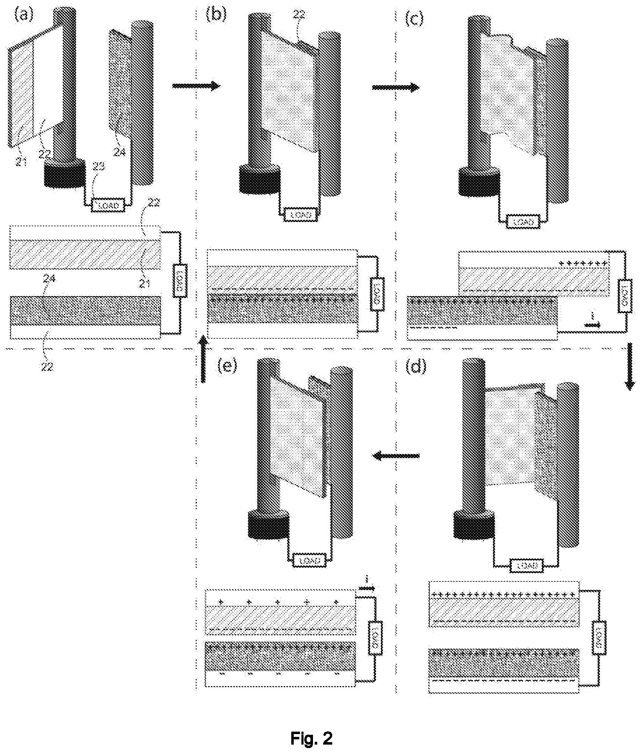

The operating principle of the triboelectric driven turbine can be described by the coupling of contact charging and electrostatic induction as shown in Figure 2 in an embodiment in which the triboelectric materials comprise Nylon 6.6 **24** and PTFE **21** films. When there is no fluid flow, the propeller **102** is stationary and consequently, the triboelectric layers (Nylon 6.6 **24** and PTFE **21)** are separated from each other. This corresponds to the initial state [Figure 2(a)], where there are no tribo-charges on the triboelectric surface. Immediately upon beginning the fluid flow, the propeller **102** and the plate fixed on the shaft **109** start to rotate, bringing the PTFE film **21** into full contact with the Nylon **6.6 24** on either one of the brackets **107** [Figure 2 (b)].

The triboelectric materials in contact have different tribo-polarities (i.e. different tendencies to gain or lose electrons) and the triboelectric effect will enable the generation of surface charges at the contact area (leaving the PTFE **21** with net negative charge and the Nylon 6.6 **24** with positive charge). The contact surfaces have opposite charges with equal densities and a small electric potential difference is generated [Figure 2(b)].

The propeller continues to rotate and, since the PTFE plate is flexible, it will bend in order to sweep across the more rigid Nylon plate [Figure 1(c)]. The strong electrostatic attraction between the two tribo-charged surfaces has the tendency to keep the intimate contact between the PTFE film **21** and the Nylon 6.6 film **24.** With the rotation of the propeller **102,** the PTFE plate is guided to slide across the Nylon surface and there is a continuous decrease in the overlapping area between the two triboelectric surfaces.

During sliding, due to the incomplete overlap of the surfaces, a disequilibrium of charges appears and these charges generate an electric field almost parallel to the plates, inducing a higher potential at the electrode **22** of the Nylon layer **24.** The generated potential difference drives a current flow in the external load **23** from the electrode **22** of the Nylon layer to that of the PTFE layer in order to generate an electric potential drop that cancels the tribo-charge-induced potential. This process continues until the two triboelectric layers are entirely separated [Figure 1(d)] and the total transferred charges be equal the amount of the triboelectric charges on each surface.

With the fluid flow, the propeller **102** continues to rotate until it arrives to the next bracket with another Nylon plate [Figure 1(e)].

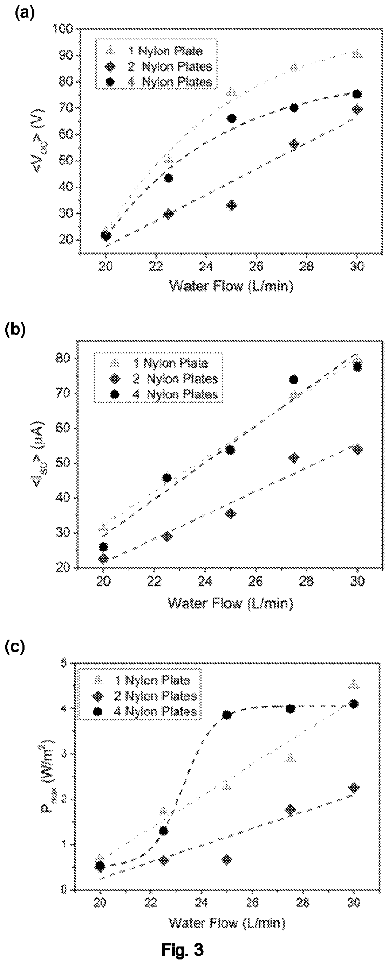

For three configurations of triboelectric device and with different water flows, it was studied which configuration was the best for the effective harvesting of energy through water movement. These studies revealed that the open-circuit voltage (VOC) increases with increasing water flow, with the maximum VOC occurring for the maximum used water flow of 30 L/min. The largest electrical output takes place for 30 L/min and the structure constituted by four brackets (four Nylon plates and one PTFE plate) leads to a better device performance, with a power per second of 153.7 mW/s and power per cycle of 11.0 mW/cycle. For this configuration it was obtained a mean VOC of 75.3 V [Figure 3 (a)], a mean current of 77.7 µA [Figure 3 (b)] and a maximum power density of 4.1 W/m2 [Figure 3 (c)].

While specific embodiments of this invention have been shown and described, it should be understood that many variations thereof are possible. The description of the present invention has been presented for purposes of illustration and description, and is not intended to be exhaustive or limited to the invention in the form released. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

It is disclosed a rotary system comprising different triboelectric materials able to generate electricity.

It is disclosed a triboelectric driven turbine to generate electricity from the motion of fluid, comprising:
a propeller placed into a tube to direct the fluid flow and to be forced to rotate, where the propeller is attached to a support with a shaft;
plates with the first triboelectric material are fixed on the shaft that rotates using the motion of the propeller caused by the fluid flow; and
a framework with brackets where the plates with the second triboelectric materials are fixed.

In an embodiment of the triboelectric device, the device can be coupled inline to various fluid movements such on oil extraction, engine-cooling system in the car, the refrigeration system in the aircraft and/or applied to restrict areas in extreme conditions.

In an embodiment of the triboelectric device, the fan, propeller or screw propeller has helical, cycloidal shape.

In an embodiment of the triboelectric device, the input direction of fluid flow is perpendicular or parallel to the fan, propeller or screw propeller.

In an embodiment of the triboelectric device, the first and second triboelectric materials comprise materials selected from a triboelectric series and with opposite tribopolarities.

In an embodiment of the triboelectric device, the surface morphology of triboelectric materials comprises a texture that includes a plurality of structures made by physical processes and chemical functionalization.

In an embodiment of the triboelectric device, in each of the sides of the first and second triboelectric materials is placed a conductor that acts as the respective electrode.

In an embodiment of the triboelectric device, the plates with the two types of triboelectric materials have different characteristics in relation to the stiffness.

In an embodiment of the triboelectric device, the plate (or plates) fixed on the shaft are flexible and the plate (or plates) fixed on the brackets are less flexible than the plate (or plates) fixed on the shaft.

In an embodiment of the triboelectric device, the plates fixed on the brackets are connected in series or parallel.

In an embodiment of the triboelectric device, it is operated by a method of generating an electrical current and voltage for a triboelectric device, comprising the steps of:
bringing the first triboelectric material into full contact with the second triboelectric material, when the propeller starts to rotate due to the fluid flow;
continuing the propeller to rotate, the plate with the first triboelectric material is guided to slide across the surface of the plate with the second triboelectric material; and
applying a load between the plate with the first triboelectric material and the plates with the second triboelectric material, thereby causing an electrical current to flow through the load.

In an embodiment of the triboelectric device, the device is applied as a self-powered sensor that can work, and send data using fluid movements.

In an embodiment of the triboelectric device, the device incorporates other types of energy harvesters by hybridization, like, for example, piezoelectric nanogenerators or magnetic induction.

The term "comprising" whenever used in this document is intended to indicate the presence of stated features, integers, steps, components, but not to preclude the presence or addition of one or more other features, integers, steps, components or groups thereof.

The invention should not be seen in any way restricted to the embodiments described and a person with ordinary skill in the art will foresee many possibilities to modifications thereof.

The following claims further set out particular embodiments of the invention.

## Claims

1. A rotary triboelectric generator device comprising different triboelectric materials for generating electricity, said generator comprising:
a rotor shaft (109);
a first triboelectric material plate (110) fixed on said shaft (109);
a bracket framework (113) for receiving at least a second triboelectric material plate;
a second triboelectric material plate (106) fixed in said framework;
arranged such that the first triboelectric plate comes into successive contacting and sliding against the second triboelectric plate, when said rotor shaft (109) rotates,
**characterised in that**
both the first triboelectric material plate (110) and the second triboelectric material plate (106) are flexible plates;
and the first triboelectric material plate (110) and the second triboelectric material plate (106) are flexible plates having a different stiffness.

2. A triboelectric device according to the previous claim comprising a driven turbine to generate electricity from the motion of fluid, comprising:
a propeller (102) for placing into a tube (101) to direct the fluid flow and thereupon to be forced to rotate, wherein the propeller (102) is attached to said shaft (109);
such that said shaft rotates when the motion of the propeller is caused by the fluid flow.

3. A triboelectric device according to the previous claim, wherein the propeller (102) has a helical, cycloidal, fan or screw shape.

4. A triboelectric device according to claim 2 or 3 wherein the input direction of fluid flow is perpendicular or parallel to the propeller (102).

5. A triboelectric device according to any of the previous claims 2-4, for coupling inline to fluid movements comprising oil extraction, automotive engine-cooling, aircraft refrigeration system and/or restricted areas in extreme atmosphere or dampness conditions.

6. A triboelectric device according to any of the previous claims, wherein the first and second triboelectric materials comprise materials selected from a triboelectric series and with opposite tribo-polarities.

7. A triboelectric device according to any of the previous claims, wherein the surface morphology of the triboelectric materials comprises a chemically and physically functionalized texture.

8. A triboelectric device according to any of the previous claims, wherein one of the sides of the first and second triboelectric materials (110, 106) is placed a conductor that acts as the electrode.

9. A triboelectric device according to any of the previous claims, wherein the plates with the two types of triboelectric materials have different stiffness characteristic.

10. A triboelectric device according to any of the previous claims wherein the plate or plates fixed on the shaft are flexible and the plate or plates fixed on the brackets are less flexible than the plate or plates fixed on the shaft.

11. A triboelectric device according to any of the previous claims, comprising a plurality of first triboelectric material plates (110) fixed on said shaft (109) and/or a plurality of second triboelectric material plates (106) fixed in said framework (113).

12. A triboelectric device according to the previous claim, wherein the plates fixed on the brackets (107) are connected in series or parallel and/or the plates fixed in said framework (113) are connected in series or parallel.

13. Atriboelectric device according of to any of the previous claims comprising a self-powered sensor for working the sensor and sending data using a fluid flow.

14. A hybrid triboelectric device comprising a triboelectric device according to any of the previous claims and further comprising one or more of other types of energy harvesters.

15. A hybrid triboelectric device according to the previous claim comprising a piezoelectric nanogenerator or a magnetic induction energy harvester.

## Patentansprüche

1. Eine drehbare triboelektrische Generatorvorrichtung umfassend verschiedene triboelektrische Werkstoffe zur Stromerzeugung, wobei der genannte Generator umfasst:
eine Rotorwelle (109);
eine erste triboelektrische Werkstoffplatte (110), die an der genannten Welle (109) befestigt ist;
ein Halterungsrahmen (113) für die Aufnahme von mindestens einer zweiten triboelektrischen Werkstoffplatte;
eine zweite triboelektrische Werkstoffplatte (106), die an dem genannten Rahmen befestigt ist;
so angeordnet, dass die erste triboelektrische Platte sukzessive mit der zweiten triboelektrischen Platte in Kontakt kommt und gegen diese gleitet, wenn sich die genannte Rotorwelle (109) dreht,
**dadurch gekennzeichnet, dass**
sowohl die erste triboelektrische Werkstoffplatte (110) als auch die zweite triboelektrische Werkstoffplatte (106) flexible Platten sind;
und die erste triboelektrische Werkstoffplatte (110) und die zweite triboelektrische Werkstoffplatte (106) flexible Platten mit unterschiedlicher Steifigkeit sind.

2. Eine triboelektrische Vorrichtung nach dem vorangehenden Anspruch, umfassend eine durch die Bewegung von Flüssigkeiten angetriebene Turbine zur Stromerzeugung, umfassend:
ein Axialrad (102) zum Einsetzen in ein Rohr (101) zur Leitung des Flüssigkeitsstroms und anschließender erzwungener Drehbewegung, wobei das Axialrad (102) an der genannten Welle (109) befestigt ist;
so dass sich die genannte Welle dreht, wenn das Axialrad durch den Flüssigkeitsstrom bewegt wird.

3. Eine triboelektrische Vorrichtung nach dem vorangehenden Anspruch, wobei das Axilrad (102) die Form einer Helix, einer Zykloide, eines Lüfters oder einer Schraube hat.

4. Eine triboelektrische Vorrichtung nach Anspruch 2 oder 3, wobei die Eingangsrichtung des Flüssigkeitsstroms senkrecht oder parallel zum Axialrad (102) erfolgt.

5. Eine triboelektrische Vorrichtung nach einem der vorhergehenden Ansprüche 2-4 zur Inline-Kopplung an Flüssigkeitsbewegungen, umfassend die Ölförderung, die Motorkühlung bei Kraftfahrzeugen, das Kühlsystem bei Flugzeugen und/oder gesperrte Bereiche mit extremer Atmosphäre oder mit extremen Feuchtigkeitsbedingungen.

6. Eine triboelektrische Vorrichtung nach einem der vorhergehenden Ansprüche, wobei der erste und zweite triboelektrische Werkstoff Werkstoffe umfassen, die aus einer triboelektrischen Reihe und mit entgegengesetzten statischen Polaritäten ausgewählt sind.

7. Eine triboelektrische Vorrichtung nach einem der vorangehenden Ansprüche, wobei die Oberflächenmorphologie der triboelektrischen Werkstoffe eine chemisch und physikalisch funktionalisierte Textur aufweist.

8. Eine triboelektrische Vorrichtung nach einem der vorangehenden Ansprüche, bei der auf einer der Seiten des ersten und zweiten triboelektrischen Werkstoffs (110, 106) ein Leiter angebracht ist, der als Elektrode wirkt.

9. Eine triboelektrische Vorrichtung nach einem der vorangehenden Ansprüche, wobei die Platten mit den beiden Arten von triboelektrischen Werkstoffen unterschiedliche Eigenschaften bei der Steifigkeit aufweisen.

10. Eine triboelektrische Vorrichtung nach einem der vorangehenden Ansprüche, wobei die an der Welle befestigte(n) Platte(n) flexibel ist/sind und die an den Halterungen befestigte(n) Platte(n) weniger flexibel ist/sind als die an der Welle befestigte(n) Platte(n).

11. Eine triboelektrische Vorrichtung nach einem der vorangehenden Ansprüche, umfassend eine Vielzahl der ersten triboelektrischen Werkstoffplatten (110), die an der genannten Welle (109) befestigt sind, und/oder eine Vielzahl der zweiten triboelektrischen Werkstoffplatten (106), die in dem genannten Rahmen (113) befestigt sind.

12. Eine triboelektrische Vorrichtung nach dem vorangehenden Anspruch, bei der die an den Halterungen (107) befestigten Platten in Reihe oder parallel geschaltet sind und/oder die an dem genannten Rahmen (113) befestigten Platten in Reihe oder parallel geschaltet sind.

13. Eine triboelektrische Vorrichtung nach einem der vorhergehenden Ansprüche, die einen Sensor ohne äußere Energieversorgung umfasst, zum Betrieb des Sensors und zum Senden von Daten unter Nutzung eines Flüssigkeitsstroms.

14. Eine hybride triboelektrische Vorrichtung, umfassend eine triboelektrische Vorrichtung gemäß einem der vorangehenden Ansprüche sowie ferner umfassend eine oder mehrere andere Arten von Ladungssammlern.

15. Eine hybride triboelektrische Vorrichtung nach dem vorangehenden Anspruch, umfassend einen piezoelektrischen Nanogenerator oder einen magnetischen Ladungssammler für Induktionsspannung.

## Revendications

1. Un dispositif générateur triboélectrique rotatif comprenant différents matériaux triboélectriques pour générer de l'électricité, ledit générateur comprenant :
un arbre de rotor (109) ;
une première plaque de matériau triboélectrique (110) fixée audit arbre (109) ;
un cadre de support (113) pour recevoir au moins une seconde plaque de matériau triboélectrique ;
une seconde plaque de matériau triboélectrique (106) fixée audit cadre ;
arrangé tel que la première plaque triboélectrique entre en contact et glissage successif avec la seconde plaque triboélectrique, lorsque ledit arbre de rotor (109) tourne,
**caractérisé en ce que**
aussi bien la première plaque de matériau triboélectrique (110) que la seconde plaque de matériau triboélectrique (106) sont des plaques flexibles ;
et la première plaque de matériau triboélectrique (110) et la seconde plaque de matériau triboélectrique (106) sont des plaques flexibles ayant une rigidité différente.

2. Un dispositif triboélectrique selon la revendication précédente comprenant une turbine accionnée pour générer de l'électricité à partir du mouvement de fluides, comprenant :
une hélice (102) à placer dans un tube (101) pour diriger l'écoulement de fluides et dès lors être forcée à tourner, dans laquelle l'hélice (102) est attachée audit arbre (109) ;
tel que ledit arbre tourne lorsque le mouvement de l'hélice est causé par l'écoulement de fluides.

3. Un dispositif triboélectrique selon la revendication précédente, dans lequel l'hélice (102) a une forme hélicoïdale, cycloïdale, d'ventilateur ou de vis.

4. Un dispositif triboélectrique selon la revendication 2 ou 3 dans lequel la direction d'entrée de l'écoulement de fluides est perpendiculaire ou parallèle à l'hélice (102).

5. Un dispositif triboélectrique selon l'une quelconque des revendications précédentes 2-4, pour accoupler l'alignement aux mouvements des fluides comprenant l'extraction de pétrole, le refroidissement de moteur automobile, le système de réfrigération des avions et/ou les zones réglementées dans des conditions atmosphériques ou d'humidité extrêmes.

6. Un dispositif triboélectrique selon l'une quelconque des revendications précédentes, dans lequel le premier et le second matériau triboélectrique comprend des matériaux sélectionnés à partir d'une série triboélectrique et avec des tribo-polarités opposées.

7. Un dispositif triboélectrique selon l'une quelconque des revendications précédentes, dans lequel la morphologie de la surface des matériaux triboélectriques comprend une texture fonctionnalisée chimique et physique.

8. Un dispositif triboélectrique selon l'une quelconque des revendications précédentes, dans lequel sur un des côtés des premier et second matériaux triboélectriques (110, 106) est placé un conducteur qui agit en tant qu'électrode.

9. Un dispositif triboélectrique selon l'une quelconque des revendications précédentes, dans lequel les plaques avec les deux types de matériaux triboélectriques ont une caractéristique de rigidité différente.

10. Un dispositif triboélectrique selon l'une quelconque des revendications précédentes, dans lequel la plaque ou les plaques fixée(s) à l'arbre sont flexibles et la plaque ou les plaques fixée(s) aux supports sont moins flexibles que la plaque ou les plaques fixée(s) à l'arbre.

11. Un dispositif triboélectrique selon l'une quelconque des revendications précédentes, comprenant une pluralité de premières plaques de matériau triboélectrique (110) fixées audit arbre (109) et/ou une pluralité de secondes plaques de matériau triboélectrique (106) fixées audit cadre (113).

12. Un dispositif triboélectrique selon la revendication précédente, dans lequel les plaques fixées aux supports (107) sont connectées en séries ou en parallèle et/ou les plaques fixées audit cadre (113) sont connectées en séries ou en parallèle.

13. Un dispositif triboélectrique selon l'une quelconque des revendications précédentes comprenant un capteur auto-alimenté pour faire fonctionner le capteur et envoyer des données utilisant un écoulement de fluides.

14. Un dispositif triboélectrique hybride comprenant un dispositif triboélectrique selon l'une quelconque des revendications précédentes et comprenant également un ou plusieurs autres types de capteurs d'énergie.

15. Un dispositif triboélectrique hybride selon la revendication précédente comprenant un nanogénérateur piézoélectrique ou un capteur d'énergie à induction magnétique.
